# EUROPÄISCHE PATENTSCHRIFT

(11) **EP 1 180 589 B1**
(45) Veröffentlichungstag und Bekanntmachung des Hinweises auf die Patenterteilung: **02.02.2005**
(21) Anmeldenummer: 01890238.7
(22) Anmeldetag: 20.08.2001
(51) Int. Cl.: F02D 21/08, F02D 35/00

(54) **Verfahren und Vorrichtung zur Steuerung der Abgasrückführung einer Luftverdichtenden Verbrennungskraftmaschine**
Method and apparatus for controlling the exhaust gas recirculation in a compression ignition engine
Méthode et dispositif pour commander le recyclage des gaz d'échappement d'un moteur à allumage par compression

(30) Priorität: 18.08.2000 AT 6012000 U
(43) Veröffentlichungstag der Anmeldung: 20.02.2002
(73) Patentinhaber: Engineering Center Steyr GmbH & Co KG, 4300 St. Valentin (AT)
(72) Erfinder: Kordesch, Valentin, Dr., 9133 Miklauzhof (AT); Krenn, Andreas, 2500 Baden (AT); Rollenitz, Leopold, 3062 Kirchstetten (AT); Waras, Heinz, 4400 Steyr (AT)
(74) Vertreter: Kovac, Werner

(56) Entgegenhaltungen:
- EP-A- 1 024 272
- DE-C- 3 801 296
- US-A- 3 915 134
- US-A- 5 738 126
- US-A- 5 908 022

## Beschreibung

Die Erfindung handelt von einem Verfahren zur Steuerung des Abgasrückführventiles einer luftverdichtenden Verbrennungskraftmaschine zur Verhinderung des Rauchstoßes durch Reduzierung der Abgasrückführrate bei steigender Belastung, bei welchem Verfahren von der momentanen Motordrehzahl und von der momentanen Lastanforderung ausgegangen wird und von einer Vorrichtung zur Steuerung des Abgasrückführventiles.

Üblicherweise wird die Abgasrückführung anhand eines Kennfeldes gesteuert, das Motordrehzahl und Lastanforderung mit der Abgasrückführrate in Beziehung setzt, wie etwa in der US 3,915,134 beschrieben. Allgemein ist die Rückführrate bei Schwachlast und niederer Drehzahl am größten und nimmt in Richtung Vollast ab. Eingestellt wird die Rückführrate mittels eines Abgasrückführventiles, das bei der Rückführrate Null geschlossen ist. Um der Dynamik von Belastungsänderungen Rechnung zu tragen, wird dann beim Beschleunigen die Abgasrückführung unterbrochen, das Abgasrückführventil also geschlossen, und nach dem Beschleunigen bzw bei Lastabnahme die Abgasrückführung verzögert wieder eingeschaltet, das Abgasrückführventil langsam wieder bis zu dem dem Kennfeld entnommenen Wert geöffnet.

Trotzdem tritt beim Beschleunigen, also bei Zunahme der Lastanforderung bei steigender Drehzahl, vor allem bei mäßigem Beschleunigen ein mehr oder weniger kurzer Rauchstoß auf. Das ist darauf zurückzuführen, dass sich von der dem Beschleunigen vorausgegangen Stationärphase noch Auspuffgas im Ansaugtrakt befindet und darauf, dass bei beginnender Beschleunigung der auf das Abgasrückführventil wirkende Druck der Auspuffgase ansteigt.

Die Erfindung soll diesem Phänomen entgegenwirken. Das erfindungsgemäße Verfahren besteht in den in Anspruch 1 angegebenen Schritten. Die Tabelle kommt wegen der Vorteile des Verfahrens insgesamt ohne Sicherheitszuschläge aus, kann also in sehr kurzen Zeitabständen aus der momentanen Motordrehzahl und der momentanen Lastanforderung sehr genau die stationäre Sollstellung des Abgasrückführventiles angeben, aus der dann zeitverzögert eine dynamische Sollstellung gebildet wird.

Die der Änderungsgeschwindigkeit der momentanen Lastanforderung entsprechende Schaltfunktion bestimmt nicht nur den Zeitpunkt des Schließens des Abgasrückführventiles, sondern auch die Dauer des Geschlossenbleibens in Abhängigkeit von der Stärke der Beschleunigung. Das geschieht in der Weise, dass die zeitverzögerte dynamische Sollstellung unterdrückt und statt dessen der Wert Null entsprechend einem ganz geschlossen Abgasrückführventil gesetzt wird, solange der Funktionswert der Schaltfunktion über dem Schwellenwert liegt. Wenn der Funktionswert der Schaltfunktion wieder unter den Schwellenwert absinkt, nimmt das Abgasrückführventil die dynamische Sollstellung ein. Damit wird die Dauer des Geschlossenbleibens bestimmt.

In einer bevorzugten Verfahrensführung ist die der Änderungsgeschwindigkeit der momentanen Lastanforderung entsprechende Schaltfunktion die repetitiv berechnete Differenz aus der momentanen Lastanforderung und der gefilterten momentanen Lastanforderung.

Die erfindungsgemäße Vorrichtung zur Steuerung des Abgasrückführventiles einer luftverdichtenden Verbrennungskraftmaschine, die einen Sensor zur Ermittlung eines der Motordrehzahl entsprechenden Signales, besteht aus einer Einheit zur Ermittlung eines dem Drehmomentwunsch entsprechenden Signales, einer Steuereinheit und einer Servoeinheit, wobei die Steuereinheit aus den Signalen und unter Benutzung einer Tabelle ein Sollstellungssignal für die Servoeinheit erzeugt. Sie enthält:
a) ein erstes Verzögerungsglied mit einem ersten Komparator und einem ersten Schalter, wobei das Verzögerungsglied aus dem statischen Sollstellungssignal ein dynamisches Sollstellungssignal bildet und der Komparator die Verzögerung beim Schließen des Abgasrückführventiles unterdrückt, indem er den ersten Schalter betätigt,
b) ein Differenzierglied mit einem nachgeordneten zweiten Komparator, wobei das Differenzierglied das dem Drehmomentwunsch entsprechende Signal differenziert und der zweite Komparator es mit einem Schwellenwert vergleicht,
c) einem zweiten Schalter, der das Sollstellungssignal [EVCOM] gleich Null setzt, wenn im zweiten Komparator der Schwellenwert [SW] überschritten wird.

Das erste Verzögerungsglied macht aus dem statischen ein dynamisches Sollstellungssignal für das Abgasrückführventil und der erste Komparator in Verbindung mit dem ersten Schalter bewirkt beim Schließen eine Umgehung des Verzögerungsgliedes, also ein sofortiges Schließen des Abgasrückführventiles. Das Differenzierglied erzeugt eine die Stärke der Beschleunigung beschreibende Größe. Diese bestimmt über den zweiten Komparator, wann das Abgasrückführventil geschlossen, und wann es wieder geöffnet wird.

Eine vorteilhafte Weiterbildung der Vorrichtung besteht darin, dass die Zeitkonstante des Differenziergliedes größer als die Zeitkonstante des Verzögerungsgliedes ist. Dadurch wird verhindert, dass nach starkem und anhaltendem Beschleunigen das Abgasrückführventil vorzeitig geöffnet wird. Das vom Differenzierglied erzeugte Signal hat das letzte Wort. Der Schwellenwert wird motor- und fahrzeugspezifisch gewählt.

Im folgenden wird die Erfindung anhand von Abbildungen beschrieben und erläutert. Es stellen dar:
- Fig. 1:: Das Schema einer für die Anwendung des erfindungsgemäßen Verfahrens geeigneten Verbrennungskraftmaschine,
- Fig. 2:: Ein Beispiel eines Kennfeldes für die Abgas-Rückführrate,
- Fig. 3:: Ein Schaltschema der erfindungsgemäßen Steuerungsvorrichtung,
- Fig. 4:: Ein Zeitschaubild zum erfindungsgemäßen Verfahren.

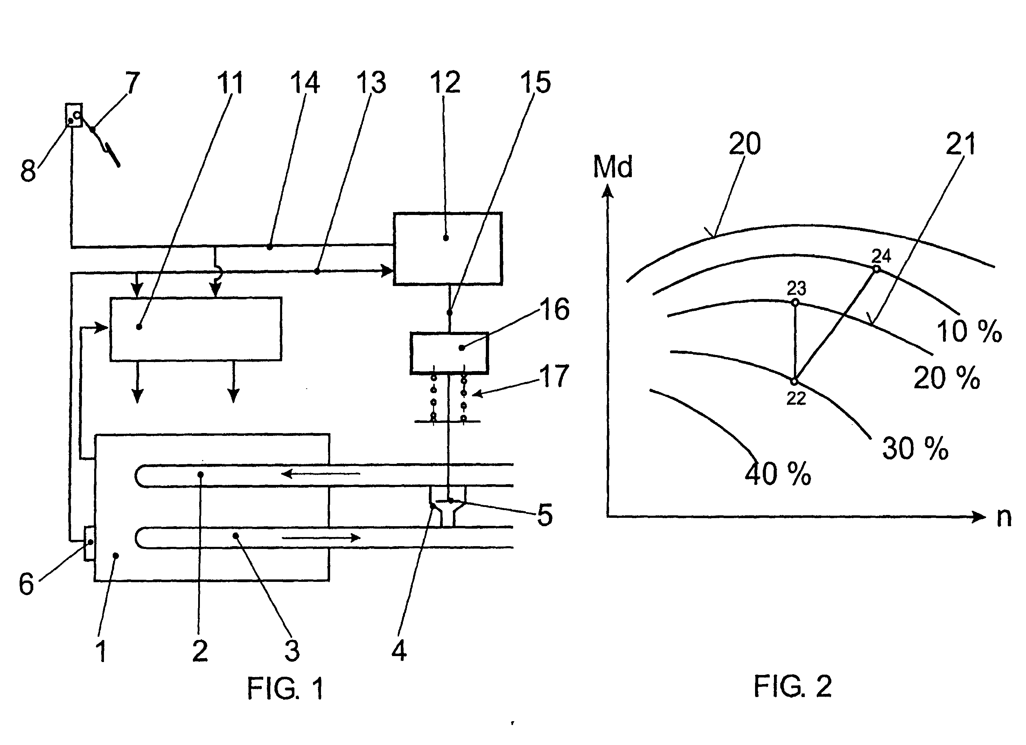

In Fig. 1 ist die Verbrennungskraftmaschine 1 nur angedeutet. Sie hat einen Einlasskrümmer 2 und einen Auspuffkrümmer 3, die über eine Rückführleitung 4 und ein Abgasrückführventil 5 miteinander verbunden sind. An dem Motor ist noch ein Drehzahlmesser 6 angebracht, der ein Drehzahlsignal RPM liefert. Ein Gaspedalwertgeber 7 liefert über einen Signalumformer 8 ein kalibriertes Lastanforderungssignal BETACAL. Diese beiden Signale werden einem Motorregler 11 und über Eingangsleitungen 13,14 einer Steuereinheit 12 für die Abgasrückführung zur Verfügung gestellt. Auf den Motorregler wird hier nicht näher eingegangen. Die Steuereinheit 12 erzeugt als Ausgangssignal ein Sollstellungssignal EVCOM, das über eine Ausgangsleitung 15 einer Servoeinheit 16 zugeführt wird. Diese positioniert das Abgasrückführventil 5, das von einer Feder 17 in Schließrichtung beaufschlagt ist.

In Fig. 2 ist die Vollastlinie mit 20 bezeichnet und eine der Linien konstanter Rückführrate mit 21. Die Rückführrate beträgt dort, in einem Betriebspunkt 23 im stationären Zustand 20%, was bedeutet, dass 20% der Ansaugluft rückgeführtes Auspuffgas sind. Je weiter das Abgasrückführventil 5 geschlossen ist, desto geringer die Rückführrate und desto kleiner die rückgeführte Abgasmenge.

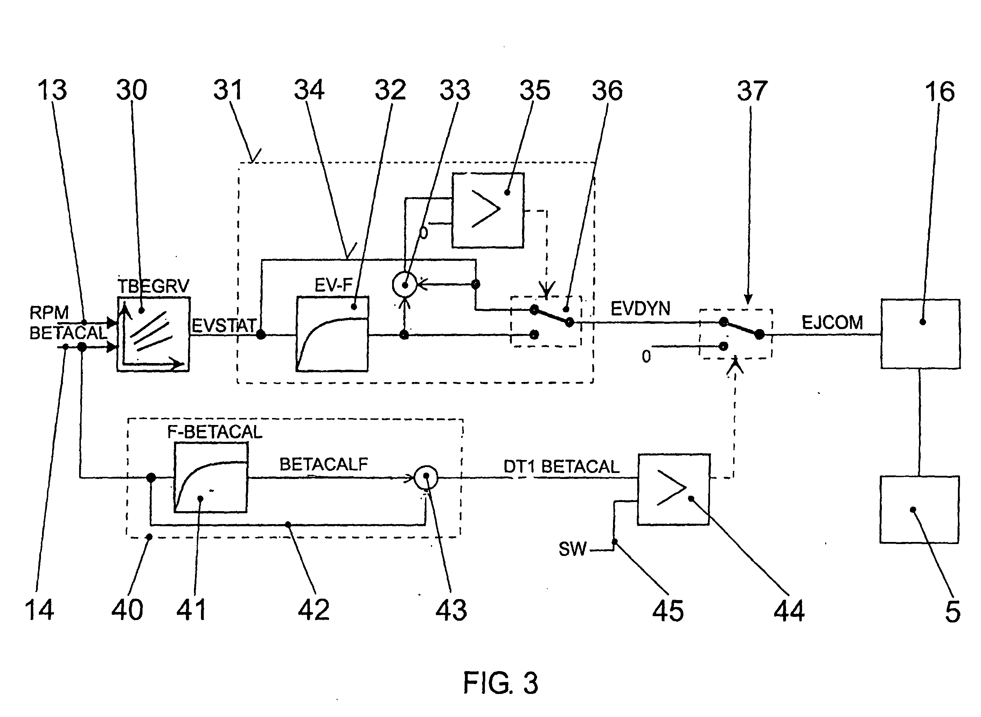

Fig. 3 zeigt ein Schema der Steuereinheit 12, wobei diese aus Hardware-Einheiten bestehen kann oder die einzelnen Schritte werden von einem Prozessor repetitiv abgearbeitet. Die Eingangsleitungen 13,14 von Fig. 1 finden sich hier links im Bild wieder. Sie führen zu einer Tabelle TBEGRV, 30, in der aus den beiden Eingangssignalen RPM und BETACAL eine statische Sollposition EVSTAT des Abgasrückführventiles 5 als Ausgangssignal generiert wird. Dieses Signal gelangt in die Öffnungsverzögerungsgruppe 31. In dieser wird es in einem ersten Verzögerungsglied 32, seine Funktion ist mit EV_F bezeichnet, in ein verzögertes Signal umgewandelt und mit negativem Vorzeichen einem ersten Summierungsglied 33 zugeleitet.

In der Öffnungsverzögerungsgruppe 31 wird die Differenz aus dem verzögerten Signal und dem in der Umgehungsleitung 34 angeführten unverzögerten statischen Signal gebildet. Im ersten Komparator 35 wird diese mit der Größe 0 verglichen. Ist die Differenz größer als 0, das heißt das Abgasrückführventil 16 soll geöffnet werden, stellt ein erster Schalter 36 die Verbindung über das erste Verzögerungsglied 32 her. Andernfalls bringt der Komparator 35 den ersten Schalter 36 in die abgebildete Stellung, in der das stationäre Sollstellungssignal EVSTAT das Verzögerungsglied umgeht und als dynamisches Sollstellungssignal EVDYN genommen wird. Damit wird erreicht, dass das erste Verzögerungsglied 32 nur beim Öffnen des Abgasrückführventiles 5 zur Wirkung kommt, nicht aber beim Schließen.

Auf einem zusätzlichen Ast wird nun das die momentane Lastanforderung darstellende Signal BETACAL einer Differenziergruppe 40 zugeführt. In dieser wird das Signal BETACAL verzweigt. Ein Zweig geht über ein zweites Verzögerungsglied 41 und der andere Zweig unverändert über eine zweite Umgehungsleitung 42 zu einem zweiten Summierungsglied 43. Die Differenz aus einem unverzögerten Signal und demselben Signal, aber verzögert, entspricht einer gefilterten differenziellen Ableitung erster Ordnung. Mit anderen Worten, die Differenz aus dem Signal BETACAL und BETACALF ist ein Differential. Das so entstandene gefilterte Differenzialsignal DT1_BETACAL wird einem zweiten Komparator 44 zugeführt und dort mit einem Schwellenwert SW verglichen. Wenn das Signal DT1_BETACAL größer als der Schwellwert SW ist, dann betätigt der zweite Komparator den zweiten Schalter 37 und schaltet diesen in die Stellung, in der der Stellungssollwert für das Servo 16 gleich null ist.

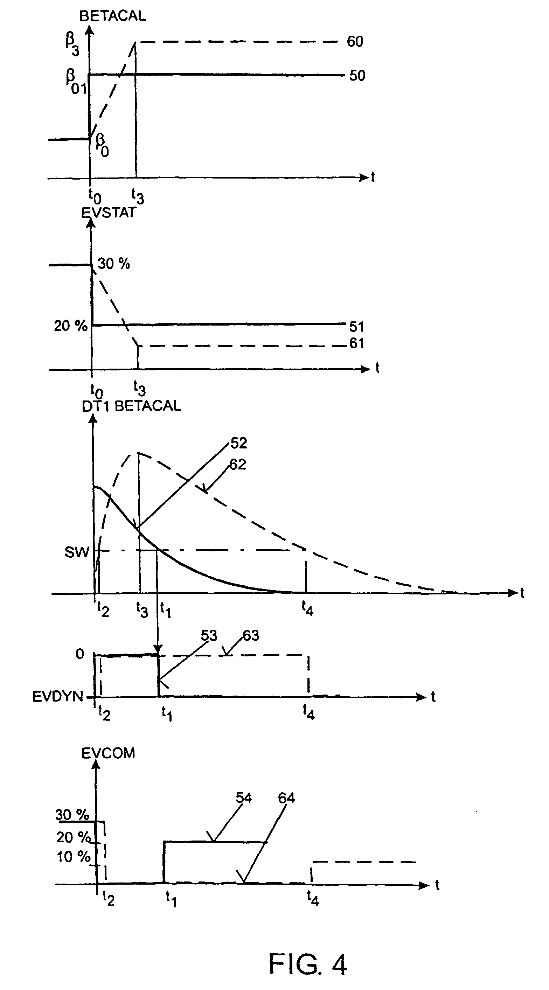

Die Wirkungsweise wird nun anhand der Fig. 4 beschrieben, in der die Funktionsverläufe zeitgleich übereinander dargestellt sind. Die Ordinaten sind jeweils die Zeitachse, die Abszissen die angegebenen Signale.

Zunächst wird auf die Reaktion auf eine sprunghafte Erhöhung des Lastanforderungssignales BETACAL, Kurve 50, von β₀ auf β₁ eingegangen. Aus dieser sprunghaften Erhöhung der Leistungsanforderung bei vorderhand konstanter Drehzahl ergibt sich aus der Tabelle 30 der in Kurve 51 dargestellte Verlauf der statischen Ventilsollstellung EVSTAT mit einem Sprung von 30% auf 20%. Da es sich dabei um eine Schließbewegung handelt, kommt die Öffnungsverzögerungsgruppe 31 nicht zur Wirkung. Das Signal BETACAL wird auch der Differenziergruppe 40 zugeführt, deren Ausgangssignal DT1_BETACAL gemäß der Kurve 52 verlauft. Dieses Differenzialsignal steigt vom Zeitpunkt des Sprunges senkrecht auf einem Maximalwert an, um dann expontiell wieder auf Null abzusinken. In dem Komparator 44 (Fig. 3) wird diese Kurve 52 mit dem Schwellenwert SW (strichpunktierte Horizontale) verglichen. Dieser wird zum Zeitpunkt t₀ überschritten und zum Zeitpunkt t₁ unterschritten, und so der zweite Schalter 37 betätigt, was durch die Kurve 53 dargestellt ist. Beim Überschreiten des Schwellenwertes zum Zeitpunkt t₀ geht der Schalter 37 von der Stellung EVDYN in die Stellung Null, beim Unterschreiten des Schwellenwertes zum Zeitpunkt t₁ wieder zurück in die Stellung EVDYN. Damit ergibt sich für die Ventilsollstellung EVCOM der in der Kurve 54 dargestellte Verlauf. Der Wert ist im stationären Betrieb vor Erreichen des Zeitpunktes t₀ 30 %, er springt zum Zeitpunkt t₀ auf Null (Abgasrückführventil ganz geschlossen) und springt zum Zeitpunkt t₁ in seine neue Stellung 20%. Die entsprechenden Punkte sind in Fig. 2 angedeutet und mit 22, 23 bezeichnet.

Um die Wirkung der Erfindung besonders deutlich zu machen, wird jetzt der Fall betrachtet, dass anstelle der Sprungfunktion von BETACAL dieser Wert rampenartig ansteigt, sodass er zum Zeitpunkt t₃ den Wert β₃ erreicht und dann auf diesem neuen Wert konstant bleibt, wie strichliert in der Kurve 60 dargestellt. Die entsprechende Veränderung der statischen Ventilsollstellung EVSTAT ist in Kurve 61 gezeigt, in der die statische Ventilsollstellung zum Zeitpunkt t₃ den Wert 10 % erreicht und dann konstant bleibt. Aus der Übergangsfunktion von BETACAL entsteht in der Differenziergruppe 40 das Signal DT1_BETACAL, das in einer Kurve 62 bis zum Zeitpunkt t₃ ansteigt und dann langsam wieder gegen Null absinkt. Zum Zeitpunkt t₂ schneidet diese Kurve den Schwellenwert SW, wodurch der Schalter 37 in die Stellung 0 bewegt wird, Kurve 63, und auch die Sollventilstellung EVCOM wieder auf Null geht. Ein geringfügiges Absinken der Kurve 54 vor dem Zeitpunkt T2 ist in Fig.4 nicht erkennbar. Die absinkende Differenzialkurve 62 schneidet zum Zeitpunkt t₄ wieder die dem Schwellenwert SW entsprechende Horizontale. Dadurch wird der zweite Schalter 37 gemäß Kurve 63 zum Zeitpunkt t₄ wieder in die Stellung EVDYN gebracht und dementsprechend gemäß Kurve 64 die dem neuen Betriebszustand entsprechende Vollventilstellung EVCOM von 10 % erreicht. Der entsprechende Betriebspunkt ist in Fig. 2 angedeutet und mit 24 bezeichnet.

Man erkennt, dass die Form und der Zeitpunkt des Wiederüberganges auf die normale dynamische Regelung von Stärke und Verlauf der Leistungsanforderung abhängt, wodurch bei geeigneter Auswahl der Zeitkonstanten in den Gliedern 32 und 41 und der Größe des Schwellenwertes SW Rauchstöße beim Lastwechsel zuverlässig unterbunden sind.

## Patentansprüche

1. Verfahren zur Steuerung des Abgasrückführventiles einer luftverdichtenden Verbrennungskraftmaschine zur Verhinderung des Rauchstoßes durch Reduzierung der Abgasrückführrate bei steigender Belastung, bei welchem Verfahren von der momentanen Motordrehzahl und von der momentanen Lastanforderung ausgegangen wird, bestehend aus folgenden Schritten:
a) aus der momentanen Motordrehzahl [RPM] und der momentanen Lastanforderung [BETACAL] wird anhand einer Tabelle [TBEGRV] eine stationäre Sollstellung [EVSTAT] des Abgasrückführventiles ermittelt,
b) aus dieser stationären Sollstellung [EVSTAT] wird zeitverzögernd eine dynamische Sollstellung [EVDYN] gebildet,
c) aus der momentanen Lastanforderung [BETACAL] wird eine deren Änderungsgeschwindigkeit entsprechende Schaltfunktion [DT1_BETACAL] ermittelt und mit einem Schwellenwert [SW] verglichen,
d) solange der Funktionswert der Schaltfunktion [DT1_BETACAL] über dem Schwellenwert [SW] liegt, wird die zeitverzögerte dynamische Sollstellung [EVDYN] unterdrückt und statt dessen der Wert Null gesetzt,
e) wenn der Funktionswert der Schaltfunktion [DT1_BETACAL] unter dem Schwellenwert [SW] liegt, nimmt das Abgasrückführventil die dynamische Sollstellung [EVDYN] ein.

2. Verfahren nach Anspruch 1, **dadurch gekennzeichnet, dass** die der Änderungsgeschwindigkeit der momentanen Lastanforderung [BETACAL] entsprechende Schaltfunktion [DT1_BETACAL] die repetitiv berechnete Differenz aus der momentanen Lastanforderung [BETACAL] und der gefilterten momentanen Lastanforderung [BETACALF] ist.

3. Vorrichtung zur Steuerung des Abgasrückführventiles einer luftverdichtenden Verbrennungskraftmaschine, die einen Sensor (6) zur Ermittlung eines der Motordrehzahl entsprechenden Signales [RPM], eine Einheit (8) zur Ermittlung eines der Lastanforderung entsprechenden Signales [BETACAL], eine Steuereinheit (12) und eine Servoeinheit (16) zur Betätigung des Abgasrückführventiles (5) umfasst, wobei die Steuereinheit aus dem der Motordrehzahl entsprechenden Signale [RPM] und dem der Lastanforderung entsprechenden Signal [BETACAL] unter Benutzung einer Tabelle [TBEGRV] ein Sollstellungssignal [EVCOM] für die Servoeinheit (16) erzeugt, **dadurch gekennzeichnet, dass** die Steuereinheit enthält:
a) ein erstes Verzögerungsglied (32) mit einem ersten Komparator (35) und einem ersten Schalter (36), wobei das Verzögerungsglied aus dem statischen Sollstellungssignal [EVSTAT] ein dynamisches Sollstellungssignal [EVDYN] bildet und der Komparator (35) die Verzögerung beim Schließen des Abgasrückführventiles (5) unterdrückt, indem er den ersten Schalter (36) betätigt,
b) einem Differenzierglied (40) mit einem nachgeordneten zweiten Komparator (44), wobei das Differenzierglied das der Lastanforderung entsprechende Signal [BETACAL] differenziert und es der zweite Komparator (44) mit einem Schwellenwert [SW] vergleicht,
c) einem zweiten Schalter (37), der das Sollstellungssignal [EVCOM] gleich Null setzt, wenn im zweiten Komparator (44) der Schwellenwert [SW] überschritten wird.

4. Vorrichtung zur Steuerung des Abgasrückführventiles nach Anspruch 3, **dadurch gekennzeichnet, dass** die Zeitkonstante des Differenziergliedes (41) größer als die Zeitkonstante des Verzögerungsliedes (32) ist.

5. Vorrichtung zur Steuerung des Abgasrückführventiles nach Anspruch 3, **dadurch gekennzeichnet, dass** der Schwellenwert [SW] motor- und fahrzeugspezifisch gewählt wird.

## Claims

1. A method of controlling the exhaust gas recirculation valve of a compression ignition internal combustion engine for preventing increased smoke emission by a reduction in the exhaust gas recirculation rate with rising load, which method is based on the instantaneous engine speed and the instantaneous load demand, comprising the following steps:
a) a static reference position [EVSTAT] of the exhaust gas recirculation valve is ascertained by means of a table [TBEGRV] from the instantaneous engine speed [RPM] and the instantaneous load demand [BETACAL],
b) a dynamic reference position [EVDYN] is formed with a time delay from said static reference position [EVSTAT],
c) a switching function [DT1_BETACAL] corresponding to the speed of change of the instantaneous load demand [BETACAL] is ascertained from the instantaneous load demand and compared to a threshold value [SW],
d) as long as the function value of the switching function [DT1_BETACAL] is above the threshold value [SW], the time-delayed dynamic reference position [EVDYN] is suppressed and instead thereof the value zero is set, and
e) if the function value of the switching function [DT1_BETACAL] is below the threshold value [SW] the exhaust gas recirculation valve assumes the dynamic reference position [EVDYN].

2. A method according to claim 1 **characterised in that** the switching function [DT1_BETACAL] corresponding to the speed of change of the instantaneous load demand [BETACAL] is the repetitively calculated difference of the instantaneous load demand [BETACAL] and the filtered instantaneous load demand [BETACALF).

3. Apparatus for controlling the exhaust gas recirculation valve of a compression ignition internal combustion engine which includes a sensor (6) for ascertaining a signal [RPM] corresponding to the engine speed, a unit (8) for ascertaining a signal [BETACAL] corresponding to the load demand, a control unit (12) and a servo unit (16) for actuation of the exhaust gas recirculation valve (5), wherein the control unit produces a reference position signal [EVCOM] for the servo unit (16) from the signal [RPM] corresponding to the engine speed and the signal [BETACAL] corresponding to the load demand, using a table [TBEGRV], **characterised in that** the control unit includes:
a) a first delay member (32) having a first comparator (35) and a first switch (36), wherein the delay member forms a dynamic reference position signal [EVDYN] from the static reference position signal [EVSTAT] and the comparator (35) suppresses the delay upon closure of the exhaust gas recirculation valve (5) by its actuating the first switch (36),
b) a differentiating member (40) with a second comparator (44) connected downstream thereof, wherein the differentiating member differentiates the signal [BETACAL] corresponding to the load demand and the second comparator (44) compares it to a threshold value [SW], and
c) a second switch (37) which sets the reference position signal [EVCOM] equal to zero if the threshold value [SW] is exceeded in the second comparator (44).

4. Apparatus for controlling the exhaust gas recirculation valve according to claim 3 **characterised in that** the time constant of the differentiating member (41) is greater than the time constant of the delay member (32).

5. Apparatus for controlling the exhaust gas recirculation valve according to claim 3 **characterised in that** the threshold value [SW] is selected to be engine- and vehicle-specific.

## Revendications

1. Procédé pour la commande de la vanne de recirculation des gaz d'échappement d'un moteur à combustion interne à compression d'air, pour éviter l'impact de la fumée par la réduction du taux de recirculation des gaz d'échappement lorsque la charge augmente, lequel procédé repose sur la vitesse de rotation instantanée du moteur et sur la demande de charge instantanée, et comprend les étapes suivantes :
a) une position de consigne stationnaire [EVSTAT] de la vanne de recirculation des gaz d'échappement est définie à l'aide d'un tableau [TBEGRV] à partir de la vitesse de rotation instantanée [RPM] et de la demande de charge instantanée [BETACAL],
b) une position de consigne dynamique [EVDYN] est générée avec un retardement à partir de cette position de consigne stationnaire [EVSTAT],
c) une fonction de commutation [DTI_BETACAL] correspondant à la vitesse de variation de la demande de charge instantanée [BETACAL] est définie à partir de cette dernière est comparée à une valeur seuil [SW],
d) tant que la valeur de la fonction de commutation [DTI_BETACAL] est supérieure à la valeur seuil [SW], la position de consigne dynamique [EVDYN] retardée est invalidée, et sa valeur est remplacée par la valeur zéro,
e) lorsque la valeur de la fonction de commutation [DTI_BETACAL] est inférieure à la valeur seuil [SW], la vanne de recirculation des gaz d'échappement adopte la position de consigne dynamique [EVDYN].

2. Procédé selon la revendication 1, **caractérisé en ce que** la fonction de commutation [DTI_BETACAL] correspondant à la vitesse de variation de la demande de charge instantanée [BETACAL] est constituée par la différence, calculée de manière répétitive, entre la demande de charge instantanée [BETACAL] et la demande de charge instantanée filtrée [BETACALF].

3. Dispositif de commande de la vanne de recirculation des gaz d'échappement d'un moteur à combustion interne à compression d'air, qui comprend un capteur (6) pour l'émission d'un signal correspondant à la vitesse de rotation du moteur [RPM], une unité (8) pour l'émission d'un signal correspondant à la demande de charge [BETACAL], une unité de commande (12) et une unité asservie (16) pour l'actionnement de la vanne de recirculation des gaz d'échappement (5), l'unité de commande émettant un signal de position de consigne [EVCOM] pour l'unité asservie (16) à partir des signaux correspondant à la vitesse de rotation du moteur [RPM] et du signal correspondant à la demande de charge [BETACAL] en utilisant un tableau [TBEGRV], **caractérisé en ce que** l'unité de commande comprend :
a) un premier élément de retardement (32) comportant un premier comparateur (35) et un premier commutateur (36), l'élément de retard générant un signal de position de consigne dynamique [EVDYN] à partir du signal de position de consigne statique [EVSTAT], et le comparateur (35) invalidant le retardement lors de la fermeture de la vanne de recirculation des gaz d'échappement (5) en actionnant le premier commutateur (36),
b) un élément différenciateur (40) comportant un deuxième comparateur (44) placé en aval, l'élément différenciateur différenciant le signal correspondant à la demande de charge [BETACAL] et le deuxième comparateur (44) le comparant à une valeur seuil [SW],
c) un deuxième commutateur (37) qui affecte au signal de position de consigne [EVCOM] une valeur égale à zéro lorsque la valeur seuil [SW] est dépassée dans le deuxième comparateur (44).

4. Dispositif de commande de la vanne de recirculation des gaz d'échappement selon la revendication 3, **caractérisé en ce que** la constante de temps de l'élément différenciateur (41) est supérieure à la constante de temps de l'élément de retardement (32).

5. Dispositif de commande de la vanne de recirculation des gaz d'échappement selon la revendication 3, **caractérisé en ce que** la valeur seuil [SW] est sélectionnée spécifiquement pour un moteur ou un véhicule.
